# EUROPEAN PATENT APPLICATION

(11) **EP 2 093 915 A1**
(43) Date of publication of application: **26.08.2009**
(21) Application number: 08151616.3
(22) Date of filing: 19.02.2008
(51) Int. Cl.: H04J 3/06, H04L 7/00, G06F 1/12, H04L 7/08

(54) **Time synchronization in a network**

(71) Applicant: ABB Research Ltd., 8050 Zürich (CH)
(72) Inventor: Deck, Bernhard, 798 09, Weilheim (DE); Landernäs, Krister, 722 16, Västerås (SE); Ebbinghaus, Werner D, 457 31, Waltrop (DE); Kjellsson, Jimmy, 723 44, Västerås (SE)
(74) Representative: Reyier, Ann-Mari

(57) **Abstract**

A method for time synchronization in a network of communicating units, comprising a master unit holding information on a master time, and at least one subunit having a clock, which is to be synchronized with the master time, wherein the units communicates with each other by means of radio communication signals carrying information sent via a hollow transmission device, which is shaped to allow wireless transmitting of the radio communication signals between the units, wherein the network is configured to have a first and a second radio channel.

## Description

### FIELD OF THE INVENTION

The present invention relates to a method and a system for time synchronization in a network of communicating units, comprising a master unit holding information on a master time, and at least one subunit having a clock, which is to be synchronized with the master time, wherein the units communicates with each other by means of radio communication signals carrying information sent via a hollow transmission device, also denoted a waveguide, which is shaped to allow wireless transmitting of said radio communication signals between the units.

The present invention also relates to a system for time synchronization in a network of communicating units, wherein the system comprises: a master unit holding information on a master time, and at least one subunit having a clock, which is to be synchronized with the master time, wherein the units communicates with each other by means of radio communication signals carrying information sent via a hollow transmission device, which is shaped to allow wireless transmitting of said radio communication signals between the units.

The invention is applicable in synchronization of clocks in a network of communicating units, where the communication is transmitted through a waveguide, for example in electric substations. Another example on applications for the invention is time-synchronization of sensors in paper-mills, where the communication is transmitted through a fully of partially enclosed frame structure.

### PRIOR ART

The main function of an electrical substation is to distribute and transform electrical power. For instance, one basic task is to switch down the voltage of distributed power to suitable levels which are useful for a wide range of users, such as utilities companies and various types of plants, etc.

For controlling and monitoring purposes, various types of data from units within the substation need to be communicated internally or externally. The units are therefore arranged in a network that allows communication. However, substations have an internal environment with excessive noise influence, such as electromagnetic noise generated by various sources, placing special demand on reliable transfer of the data without interference. Currently, communication within substations is mainly realized using optical fiber, which in turn is related to high costs. Alternatively, the transferring of data can be realized using wireless communication in a so-called waveguide that creates a controlled RF (Radio Frequency) environment without external interferences. A waveguide is a structure arranged to guide waves, for example radio waves, between different physical locations. A waveguide, besides guiding the waves, also shields radio waves from interference and electromagnetic noise. A waveguide comprises an enclosure usually having a parallelepiped structure.

Thus, a waveguide is suitable to be used for radio communication between units in a network, such as units within a substation. The units of the network can have internal clocks to time stamp events in the operation. In some applications, large amount of operational events can occur within a short time period, such as during a malfunction event in a network, for example a short circuit within a substation. To evaluate the cause of the malfunction, it is important to reliably establish the time of each event for each unit within the network. Therefore, an accurate time synchronization of the units within the network is needed for the analysis.

However, using a waveguide for radio communication between units in a network has the disadvantage that traditional time synchronization is low in accuracy due to disturbances and jitter in the system, resulting typically in a synchronization error of about 1 ms. In some application, for example, in a network of components within a substation, a more accurate time synchronization, for example a synchronization error in the order of less than 100 µs, is needed for a reliable analysis of events during operation.

An arrangement with a waveguide adapted for wireless communication in an electrical switchboard is presented in EP1701420, where the waveguide comprises an anti-interference shielding layer reducing signal interferences and disturbances, which could affect the quality and reliability of the signals during transmissions.

Further, in EP1239600 radio communication of control signals within a substation is performed utilizing a waveguide to transmit and shield signals from interference and noise.

### OBJECTS AND SUMMARY OF THE INVENTION

One object of the present invention is to provide an improved method for time synchronization in a network of communicating units.

This object is obtained by a method as defined by claim 1.

Such a method comprising: sending information including a point in time for a synchronization event from the master unit to the subunit on the first channel, receiving and storing said information on the point of time for the synchronization event in the subunit, sending a time synchronization signal from the master unit to the subunit on the second channel, when said point of time for synchronization occurs in the master time, and adjusting the clock of the subunit upon receiving the time synchronization signal according to the stored information on time for the synchronization event.

According to the invention, the solution to the above described problem with the time synchronization in a network of communicating units is solved with a method, where the first radio channel, which is used for communications within the network, is configured to transmit the information of the point in time for the synchronization event, which is to occur in the future according to the master time, and a second radio channel configured to transmit the time synchronization signal. The information on time for the synchronization event contains data on the point of time, in respect to the master time of the master unit, when the master unit will send the synchronization signal to the subunit, and the data will be used to adjust the clock of the subunit upon receiving the time synchronization signal.

The information on the point of time for the synchronization event is sent from the master unit to the subunit prior to the time for the synchronization event, according to the master time of the master unit. The subunit receives and stores the information on the point of time for the synchronization event prior to the time for the synchronization event, according to the master time of the master unit.

When the point of time for the synchronization occurs according to the master time, the master unit sends a time synchronization signal to the subunit on the second radio channel. The second channel is configured to exclusively transmit the time synchronization signal from the master unit to the subunit. Thereby, the time synchronization signal is transmitted reliably and quickly, with small jitter and latency, without interference from the master unit to the subunit. The second channel can be a simple radio channel, arranged from hardware of low cost. The time synchronization signal is configured to, upon being received by the subunit, trigger an adjustment of the clock of the subunit, according to the stored information on the point of time for the synchronization event in the subunit.

The radio channels can be separated by time division, frequency division, or code division, or any combination thereof. This means that the radio signals on the separate channels differ in time, frequency, or code.

The invention improves the accuracy of the time synchronization of the network of communicating units, by separating in respect to time and radio channel, the transmission of the information on the point of time for the synchronization event from the transmission of the time synchronization signal. Thereby, the transmission of data is achieved with a higher success probability and smaller jitter, due to less data retransmission or busy media, on a radio channel with little data load than on a radio channel with much data load. Thus, by giving the time synchronization signal a separate, dedicated radio channel, the transmission of the signal is achieved with higher precision and success probability than if the transmission would be performed on a radio channel shared with other communication. Thereby, the transmission of the time synchronization signal from the master unit to the subunit is achieved with higher precision than if the information on the point of time for the synchronization event and the time synchronization signal would be transmitted at a single time and on a single radio channel, and consequently the accuracy of the time synchronization operation is improved.

By receiving and storing the information on the point of time for the synchronization event at the subunit prior to the point of time for the synchronization event according to the master time, the uncertainty in the transmittal time for the information on the point of time for the synchronization event is not critical to the accuracy of the time synchronization operation. The accuracy of the time synchronization is dependent on the jitter of the transmission of the time synchronization signal from the master unit to the subunit. Thereby, the accuracy of the time synchronization of the network of communicating units is improved when a separate, dedicated radio channel with low interference level is used for the synchronization event.

According to an embodiment of the invention, the method further comprises sending the time synchronization signal in form of a pulse. In this embodiment of the invention, the time synchronization signal is in the form of a pulse. The transmission of data is achieved more reliably and with lower jitter on a radio channel with little data load than on a radio channel with much data load. The time synchronization signal comprises a simple form of data that is transmitted quickly, with little jitter and latency, from the master unit to the subunit. Thereby, the accuracy of the time synchronization of the network of communicating units is improved. By using a simple signal, such as a pulse, the second radio channel can be arranged from hardware of low cost.

According to an embodiment of the invention, the method further comprises receiving a master time at the master unit from an external time source, such as a Global Positioning System (GPS) receiver. In this embodiment of the invention, the master unit receives the master time from an external time source. Thereby, the master time from the external time source can be used for time synchronization of a plurality of networks of communicating units.

According to an embodiment of the invention, the method further comprises sending the information on the point of time for the synchronization event on a two way communication channel. The first channel is used for the ordinary communication in the network. Since the information is sent prio to the time of the synchronization, the jitter and latency of the channel is not limiting the accuracy of the time synchronization operation. Thereby, no additional or separate channel is need for the transmittal of the information on the point of time for the synchronization event.

According to an embodiment of the invention, the method further comprises sending the time synchronization signal on a one way communication channel. By using a one way communication channel, the second channel can be can be arranged from hardware of low cost.

According to an embodiment of the invention, the method further comprises measuring the time difference between receiving the information on the point of time for the synchronization event at the subunit and receiving the time synchronization signal at the subunit, comparing said measured time with a set value, and canceling the time synchronization if said measured time difference exceeds the set value.

In this embodiment of the invention, the subunit is measuring the time difference between receiving the information on the point of time for the synchronization event at the subunit and receiving the time synchronization signal at the subunit. The time difference is measured by the clock of the subunit. The measured time difference by the subunit is compared with a set value. The set value is stored in the subunit, and is a value in a time unit, such as second. If the measured time difference exceeds the set value, the subunit cancels the time synchronization. By canceling the time synchronization, the subunit does not adjust the clock upon receiving the time synchronization signal, according to the stored information on the point of time for the synchronization event. Thus, when the time synchronization has been canceled, the stored information on the point of time for the synchronization event in the subunit is no longer valid for the time synchronization. If the time synchronization has been canceled, the subunit needs to receive new information on the point of time for the synchronization event, before receiving the time synchronization signal. By setting a maximum value on the time difference between receiving the information on the point of time for the synchronization event at the subunit and receiving the time synchronization signal at the subunit, the risk of incorrect time synchronization is reduced.

One object of the present invention is to provide an improved system for time synchronization in a network of communicating units.

This object is obtained by a method as defined by claim 5.

Such a system comprising a first and a second radio channel, the master unit is configured to send information including a point in time for a synchronization event on the first channel to the subunit, the master unit is further configured to send a time synchronization signal to the subunit on the second channel, when said point of time for synchronization occurs in the master time, the subunit is configured to receive and store said information, the subunit is configured to adjust the clock upon receiving the time synchronization signal according to the stored information on time for the synchronization event.

The system according to the invention is advantageously used for the synchronization between communicating units in a network in a substation.

### BRIEF DESCRIPTION OF THE DRAWINGS

The invention will now be explained more closely by the description of different embodiments of the invention and with reference to the appended figures.

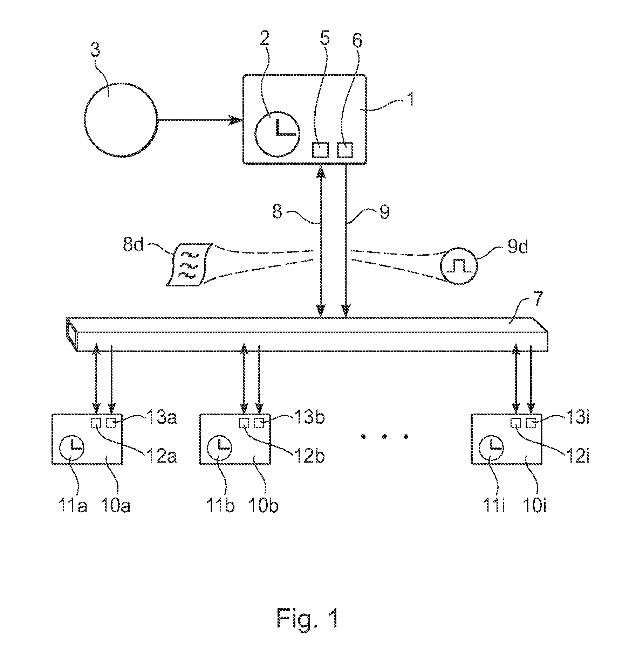

- Fig. 1: shows an example of a time synchronization operation in a network of communicating units.

### DETAILED DESCRIPTION OF PREFERRED EMBODIMENTS OF THE INVENTION

Figure 1 shows an example of a system for time synchronization in a network of communicating units according to the invention. The system comprises a master unit 1 holding information on a master time. In this example the master unit 1 includes an internal clock 2, which holds the master time. In this example the clock 2 of the master unit 1 is updated from an external time source 3, for example a GPS device. In an alternative embodiment the master units receives the master time from an external clock. In the time synchronization operation, for example, the internal clock 2 of the master unit 1 is having the master time that is used for the time synchronization. The system further comprises a plurality of subunits 10a-10i each having a clock 11a-11i, which is to be synchronized with the master time.

The units communicates with each other by means of radio communication signals carrying information sent via a hollow transmission device 7, also known as a waveguide, which is shaped to allow wireless transmitting of the radio communication signals between the units. The system has a first 8 and a second radio channel 9. The master unit 1 is configured to send information 8d including a point in time for a synchronization event on the first channel 8 to the subunits 10a-10i. The master unit 1 is further configured to send a time synchronization signal 9d to the subunits 10a-10i on the second channel 9, when the point of time for synchronization occurs in the master time. The subunits 10a-10i are configured to receive and store the point in time for the synchronization event 8d. The subunits 10a-10i are configured to adjust the clocks 11a-11i upon receiving the time synchronization signal 9d according to the stored time for the synchronization event.

The first channel 8 is used for sending the information 8d from the master unit 1 to the subunits 10a-10i for the synchronization of the clocks 11a-11i. The first radio channel can be a one way communication channel from the master unit to the subunits. However more preferable, if a two way communication channel is used between the master unit and the subunits, then it is possible to use the first channel for the ordinary communication between the master unit and the subunits. Thereby, for synchronization purpose, it is enough to have one channel in addition to the channel for the ordinary communication in network. The ordinary communication on the first channel can be various types of data, such as control or operational data in an electrical substation.

The second channel 9 is used for sending the time synchronization signal 9d from the master unit 1 to the subunits 10a-10i for the synchronization of the clocks 11a-11i. Less preferable, the second channel can be a two way communication channel between the master units to the subunits. However more preferable, if a one way communication channel is used from the master unit to the subunits, then the second channel can be arranged from hardware of low cost. The second channel is configured to be separated from other communication in the network. Thereby, the signals are transmitted with low jitter and latency, without interference from other communication in the network, resulting in high accuracy of the time synchronization of the clocks. If the second channel is adapted for transmission of signals in form of a pulse, the second radio channel can be arranged from hardware of low cost.

The master unit 1 communicates with the subunits 10a-10i of the network. The communication is of various types, such as control or operational data in an electrical substation. The master unit uses the master time for the time synchronization of the subunits. The master unit has two functions in the time synchronization of the subunits. Firstly, the information including the point in time for the synchronization event 8d, according to the master time of the master unit, is sent from the master unit to the subunits on the first radio channel 8. The information is sent prior to the time of the synchronization, according to the master time. Secondly, when the point of time for the synchronization occurs in the master time, the master unit sends the time synchronization signal 9d to the subunits on the second channel 9.

In an example of the invention, the master unit 1 most preferably includes a transceiver 5, configured to send and receive the information 8d on the first radio channel 8 between the master unit 1 and the subunits 10a-10i, as shown in figure 1. Less preferable, the first channel can also be configured for a one way communication channel from the master unit to the subunits, and the transceiver is then replaced by a transmitter. In this less preferable case, the ordinary communication in the network between the master unit and the subunits needs to be performed on a third channel, which is adapted for a two way communication. The master unit 1 further most preferably includes a transmitter 6, configured to send the synchronization signal 9d on the second channel 9 from the master unit to the subunits, as shown in figure 1. Less preferable, the second channel can also be configured for a two way communication channel between the master unit and the subunits, and the transmitter is then replaced by a transceiver.

The subunits 10a-10i of the network communicates with the master unit 1. The subunits send information, such as operational data, to the master unit. Each of the subunits has a clock 11a-11i that is used for time stamp information, such as the time of an operational event. The subunits have two functions in the time synchronization. Firstly, the subunits receive and store the information including the point of time for the synchronization event 8d, transmitted from the master unit. Secondly, the subunits receive the time synchronization signal 9d from the master unit, and the clocks of the subunits are thereafter adjusted according to the stored information on time for the synchronization event. Thereby, the synchronization event has been completed, and the clocks of the subunits have been time synchronized with the master time of the master unit.

In an example of the invention, the subunits 10a-10i preferably include transceivers 12a-12i, configured to send and receive the information 8d on the first radio channel 8 between the master unit 1 and the subunits, as shown in figure 1. If, in a less preferable case, the first radio channel 8 is configured for a one way communication, the transceiver can be replaced by receivers. The subunits further preferably include receivers 13a-13i for receiving signals on the second radio channel 9. If, in a less preferable case, the second radio channel 9 is configured for a two way communication, the receivers can be replaced by transceivers.

The information on the time for the synchronization event 8d contains data on the point of time, for example the point in time specified down to nanoseconds, in respect to the master time, for the time synchronization event. The information is sent prior to the synchronization event, from the master unit 1 to the subunits 10a-10i, according to the master time, on the first radio channel. The information is used for adjusting the clocks 11a-11i of the subunits upon receiving the time synchronization signal 9d.

The time synchronization signal 9d is sent from the master unit 1 to the subunits 10a-10i at the point of time for the synchronization event, according to the master time. The time synchronization signal is a signal that triggers an adjustment of the clocks 11a-11i of the subunits according to the stored information on the time for the synchronization event 8d.

The time synchronization signal is in an embodiment of the invention configured to be a pulse. By configuring the synchronization signal 9d as a pulse, the transmission of the signal 9d from the master unit 1 to the subunits 10a-10i is performed quickly, with small jitter and latency, resulting in an accurate time synchronization of the clocks 11a-11i. The radio channel for transmitting the synchronization signal in form of a pulse can be arranged from hardware of low cost.

The signal transmission device 7, also known as a waveguide, is used to allow wireless transmitting of the radio communication signals between the master unit 1 and the subunits 10a-10i. The waveguide connects the antennas of the transceiver devices and allows the units of the network to communicate with each other. Typically, the waveguide has a tubular shape with a rectangular profile. One side of the waveguide is provided with openings for connecting the antennas of the transceiver or transmitter devices. The waveguide 7 encloses the antennas, and shields the transmitted radio signals against interference with the surrounding. Most electromagnetic shielding material can be chosen for the waveguide, for example aluminum or copper. The dimension of the waveguide depends on the frequency of the radio communication signals. The function waveguide is to guiding the waves between the units of the network, and also to shield the radio waves from interference and electromagnetic noise.

The communication in the network of communicating units is performed by means of radio communication signals, for example, based on an Ethernet based standard IEC 61850. The units of the network include communication modules configured to modulate a signal carrying information onto a radio frequency wave, or demodulate a signal carrying information from a radio frequency wave, such as transceiver, transmitter, and receiver devices. The radio frequency wave preferably has a frequency in the interval 0.1 - 70GHz, more preferably in the interval 1 - 20GHz, and most preferably in the interval 2 - 10GHz. Further, each communication unit comprises an antenna for transmitting and/or receiving radio frequency waves connected to the communication module.

In an example of the invention the time difference between receiving the information on the point of time for the synchronization event 8d at the subunits 10a-10i and receiving the time synchronization signal 9d at the subunits is measured. The measured time difference is compared to a set value. If the measured time difference exceeds the set value, the time synchronization is canceled. Thus, the clocks 11a-11i of the subunits will not be changed upon receiving the time synchronization signal 9d. To achieve a new time synchronization operation the subunits first needs to receive new information on the point of time for a synchronization event 8d. Thereafter, if the subunits receive a new time synchronization signal 9d within the time difference of the set value, the clocks of the subunits will be adjusted. By setting a maximum value on the time difference between receiving the information on the point of time for the synchronization event at the subunit and receiving the time synchronization signal at the subunit, the risk of incorrect time synchronization is reduced.

The synchronization method comprises sending information including a point in time for a synchronization event from the master unit to the subunit on the first radio channel. Thereby, the point of time for the time synchronization in the future, according to the master time, is transmitted to the subunits. Because, the information is sent prior to the time for the synchronization, according to the master time, the transmittal time and jitter of the information is not critical for the accuracy of the time synchronization. Thereafter, the subunits receive and store the information on the point of time for the synchronization event. Thereby, the subunits have stored the necessary information for adjusting the clocks, when the point of time for the synchronization occurs in the master time. Thereafter, the time synchronization signal is sent from the master unit to the subunit on the second channel, when the point of time for synchronization occurs in the master time. Thereby, a signal is sent from the master unit to the subunit that triggers an adjustment of the clocks of the subunits. Thereafter, upon the subunits receive the time synchronization signal, the clock of the subunit is adjusted according to the stored information on time for the synchronization event. The method improves the accuracy of the time synchronization by sending the information on the point of time for the synchronization event from the master unit to the subunits, on the first radio channel, which has a varying transmission latency and jitter, prior to the time of the synchronization, according to the master time. To trigger the adjustment of the clocks of the subunits, the time synchronization signal is sent from the master unit to the subunits on the second radio channel, which has a known small latency with a small jitter. Thereby, the method improves the accuracy of the time synchronization operation.

## Claims

1. A method for time synchronization in a network of communicating units, comprising a master unit holding information on a master time, and at least one subunit having a clock, which is to be synchronized with the master time, wherein the units communicates with each other by means of radio communication signals carrying information sent via a hollow transmission device, which is shaped to allow wireless transmitting of said radio communication signals between the units, wherein the network is configured to have a first and a second radio channel, the method comprising:
sending information including a point in time for a synchronization event from the master unit to the subunit on the first channel,
receiving and storing said information on the point of time for the synchronization event in the subunit,
sending a time synchronization signal from the master unit to the subunit on the second channel, when said point of time for synchronization occurs in the master time, and
adjusting the clock of the subunit upon receiving the time synchronization signal according to the stored information on time for the synchronization event.

2. A method for time synchronization according to claim 1, wherein the method comprises sending the time synchronization signal in form of a pulse.

3. A method for time synchronization according to claim 1 or 2, wherein the method comprises receiving a master time at the master unit from an external time source.

4. A method for time synchronization according to any of the previous claims, wherein the method comprises sending the information on the point of time for the synchronization event on a two way communication channel.

5. A method for time synchronization according to any of the previous claims, wherein the method comprises sending the time synchronization signal on a one way communication channel.

6. A method for time synchronization according to any of the previous claims, wherein the method comprises:
measuring the time difference between receiving the information on the point of time for the synchronization event at the subunit and receiving the time synchronization signal at the subunit,
comparing said measured time with a set value, and
canceling the time synchronization if said measured time difference exceeds the set value.

7. A system for time synchronization in a network of communicating units, wherein the system comprises: a master unit (1) holding information on a master time, and at least one subunit (10a-10i) having a clock (11a-11i), which is to be synchronized with the master time, wherein the units communicates with each other by means of radio communication signals carrying information sent via a hollow transmission device (7), which is shaped to allow wireless transmitting of said radio communication signals between the units, **characterized in that**;
the system has a first (8) and a second radio channel (9),
the master unit (1) is configured to send information (8d) including a point in time for a synchronization event on the first channel (8) to the subunit (10a-10i), the master unit (1) is further configured to send a time synchronization signal (9d) to the subunit (10a-10i) on the second channel (9), when said point of time for synchronization occurs in the master time,
the subunit (10a-10i) is configured to receive and store said information (8d), the subunit (10a-10i) is configured to adjust the clock (11a-11i) upon receiving the time synchronization signal (9d) according to the stored information (8d) on time for the synchronization event.

8. A system for time synchronization according to claim 7, **characterized in that** the time synchronization signal (9d) is a pulse.

9. A system for time synchronization according to claim 7 or 8, **characterized in that** the master unit (1) receives the master time from an external time source (3).

10. A system for time synchronization according to claim 7-9, **characterized in that** the first radio channel (8) is a two way communication channel.

11. A system for time synchronization according to claim 7-10, **characterized in that** the second radio channel (9) is a one way communication channel.

12. A system for time synchronization according to claim 7-11, **characterized in that** the subunit (10a-10i) is configured to measure the time difference between receiving the information (8d) on the point of time for the synchronization event at the subunit (10a-10i) and receiving the time synchronization signal (9d) at the subunit (10a-10i), wherein the subunit (10a-10i) is configured to compare said measured time difference with a set value, and wherein the subunit (10a-10i) is configured to cancel the time synchronization if the set value on time difference is exceeded.

13. Use of a system according to any of the claims 7-12 for the synchronization between communicating units in a network in a substation.
